# EUROPEAN PATENT APPLICATION

(11) **EP 2 381 299 A1**
(43) Date of publication of application: **26.10.2011**
(21) Application number: 09830243.3
(22) Date of filing: 20.08.2009
(51) Int. Cl.: G02F 1/133, G09G 3/20, G09G 3/34, G09G 3/36, H01L 33/00, H04N 5/66, H04N 9/12

(54) **BACKLIGHT UNIT, LIQUID CRYSTAL DISPLAY DEVICE, DATA GENERATING METHOD, DATA GENERATING PROGRAM AND RECORDING MEDIUM**

(30) Priority: 01.12.2008 JP 2008306470
(71) Applicant: Sharp Kabushiki Kaisha, Osaka-shi, Osaka 545-8522 (JP)
(72) Inventor: FUJIWARA, Kohji, Osaka 545-8522 (JP)
(74) Representative: Goddar, Heinz J.
(86) International application number: PCT/JP2009/064600
(87) International publication number: WO 2010/064474

(57) **Abstract**

Provided are a backlight unit and a liquid crystal display device having the backlight unit mounted therein. In the backlight unit, a process control section (13) performs correction processing (basic correction processing) to a light source red image signal (RSd) of a red LED chip (42R), by using an LUT (Ra), based on the relationship between the light source red image signal and luminance of the red LED chip. Furthermore, correction processing (added correction processing) is performed by using an LUT (Gβ1), based on a light source green image signal (GSd) of a green LED chip (42G) different from the red LED chip. The light source red image signal (RSd) becomes a new light source red image signal (RSd'). In the backlight unit, luminance nonuniformity and chromaticity nonuniformity due to the fact that one LED chip is affected by instantaneous heat generated by other LED chip are reduced.

## Description

### Technical Field

The present invention relates to a backlight unit that is an example of an illuminator and a liquid crystal display device including the backlight unit. Furthermore, this invention relates also to a data generating method for generating light amount adjustment data used for controlling a light source of the backlight unit, a data generating program for generating the light amount adjustment data, and a storage medium on which the data generating program is stored.

### Background Art

In a liquid crystal display device of a type including a non-self-light emitting liquid crystal display panel, typically, an illuminator that supplies light to the liquid crystal display panel, i.e. a so-called backlight unit is also mounted. Nowadays, there are cases where, as a light source mounted in the backlight unit, a white light emitting LED (light emitting diode) is used (such as in, for example, Patent Document 1).

An example of such an LED is an LED that includes a red light emitting LED chip, a green light emitting LED chip, and a blue light emitting LED chip and generates white light by mixing light of their respective colors. It is to be noted, however, that these LED chips (particularly, the red light emitting LED chip) fail to exhibit a desired luminance due to the influence of instantaneous heat generation caused by their own light emission (for example, fail to achieve direct proportionality as a fundamental relationship between the amount of output light and a luminance exhibited).

Because of this, white light generated by mixing light from these LED chips also fails to have a desired luminance. Moreover, a desired chromaticity value as white light cannot be attained, either. As a result, light from the backlight unit includes unevenness in luminance and in chromaticity and the like.

One possible method of eliminating such unevenness in luminance and in chromaticity of white light from the LED is to perform correction processing with respect to each of the LED chips (each of light sources). To be more specific, with respect to a color video signal for light source control to be transmitted to one LED chip, fundamental correction processing based on the relationship between the color video signal and the luminance of that LED chip is performed, and a corrected signal obtained as a result of the correction processing is used to control light emission of the LED chip.

### List of Citations

### Patent Literature

Patent Document 1: JP-A-2006-145886

### Summary of the Invention

### Technical Problem

In a case, however, where the one LED chip (first LED chip) is adjacent to another LED chip(s), it is not sufficient to correct the color video signal for light source control in consideration only of instantaneous self-heat generation of the first LED chip. The reason for this is that the luminance of the first LED chip is inevitably affected to vary also by instantaneous heat generation of the another LED chip(s). Hence, the above-described correction processing as one possible method alone cannot prevent white light from the backlight unit from including unevenness in luminance and in chromaticity and the like.

The present invention has been made to solve the above-described problem. It is therefore an object of the present invention to provide a backlight unit and the like that can reduce unevenness in luminance and in chromaticity and the like with increased reliability.

### Solution to the Problem

A backlight unit includes: a plurality of light sources that emit light based on light amount adjustment data; and a control portion that performs correction processing with respect to light source control data based on image data thereby to generate the light amount adjustment data. In the backlight unit, the control portion performs, with respect to a first piece of the light source control data relating to a first light source among the plurality of light sources, fundamental correction processing based on the relationship between the first piece of the light source control data and the luminance of the first light source, and further performs additional correction processing based on another piece of the light source control data relating to a second light source among the plurality of light sources other than the first light source, thereby to generate a piece of the light amount adjustment data corresponding to the first piece of the light source control data.

According to this configuration, in generating a piece of the light amount adjustment data based on a piece of the light source control data corresponding to one light source (for example, a red light emitting light source), the piece of the light source control data is subjected not only to the fundamental correction processing based on the relationship between the piece of the light source control data related to the one light source as a first light source itself and the luminance of the first light source but also to the additional correction processing based on the influence exerted by another light source(s) (another piece of the light source control data related to instantaneous heat generation of the another light source(s)). That is, with respect to one light source, correction processing in consideration of an environment surrounding the one light source (instantaneous heat generation of an adjacent light source) is performed.

Thus, compared with, for example, light of a light source based on a piece of the light amount adjustment data obtained through the fundamental correction processing alone, light of the light source based on a piece of the light amount adjustment data obtained through the above-described correction processing (fundamental correction processing additional correction processing) is in a desired state (where unevenness in luminance and in chromaticity and the like are suppressed). As a result, light from the backlight unit is also in a desired state where unevenness in luminance and in chromaticity and the like are suppressed.

In a data generating method for generating light amount adjustment data used for controlling a plurality of light sources in the above-described backlight unit, in a case of performing correction processing with respect to light source control data based on image data thereby to generate the light amount adjustment data, with respect to a first piece of the light source control data relating to a first light source among the plurality of light sources, fundamental correction processing based on the relationship between the first piece of the light source control data and the luminance of the first light source is performed, and additional correction processing based on another piece of the light source control data relating to another light source(s) among the plurality of light sources other than the first light source further is performed, thereby to generate a piece of the light amount adjustment data corresponding to the first piece of the light source control data.

Furthermore, a data generating program for generating light amount adjustment data in the above-described backlight unit makes the control portion perform, with respect to a first piece of the light source control data relating to a first light source among the plurality of light sources, fundamental correction processing based on the relationship between the first piece of the light source control data and the luminance of the first light source, and further perform additional correction processing based on another piece of the light source control data relating to another light source(s) among the plurality of light sources other than the first light source, thereby to generate a piece of the light amount adjustment data corresponding to the first piece of the light source control data (it can be said that a computer-readable recording medium on which this data generating program is recorded is also encompassed within the scope of the present invention).

By the way, preferably, the another light source(s) in the backlight unit is constituted by a single light source or a plurality of light sources as the second light source adjacent to the first light source.

Furthermore, the another light source(s) may be constituted by a single light source or a plurality of light sources as the second light source adjacent to the first light source and a third light source adjacent to the second light source.

Furthermore, desirably, each of the plurality of light sources emits a single color light required for the generation of a white color by mixing the light of respective colors, where the first light source is a red light emitting light source and the second light source is a green light emitting light source.

Furthermore, a configuration may also be adopted in which each of the plurality of light sources emits single color light required for the generation of a white color by mixing the light of respective colors, where the first light source is a red light emitting light source and at least one light source as the second light source and the third light source are green light emitting light sources.

Furthermore, it can be said that a liquid crystal display device including the backlight unit configured as above and a liquid crystal display panel that receives light from the backlight unit is also encompassed within the scope of the present invention.

### Advantageous Effects of the Invention

According to the present invention, with respect to a piece of light source control data corresponding to one light source, correction processing in consideration of an environment surrounding the one light source is performed. Thus, compared with light from the backlight unit, which is based on light amount adjustment data obtained through correction processing in no consideration of such a surrounding environment, light from the backlight unit, which is based on light amount adjustment data obtained through the above-described correction processing is in a desired state where unevenness in luminance and in chromaticity and the like are suppressed.

### Brief Description of Drawings

[Fig. 1] is a block diagram showing various members included in a liquid crystal display device.
[Fig. 2] is a graph showing a correlation between a PWM value relating to a red light emitting LED chip and a luminance of red light.
[Fig. 3A] is a graph showing a correlation between a PWM value relating to an LED and a luminance of white light emitted by the LED based on a light source red video signal · a light source green video signal · a light source blue video signal, which have not been subjected to correction processing.
[Fig. 3B] is a graph showing a correlation between a PWM value relating to the LED and a luminance of white light emitted by the LED based on a light source red video signal that has been subjected to correction processing in consideration only of self-heat generation of the red light emitting LED chip, and a light source green video signal · a light source blue video signal, which have not been subjected to correction processing.
[Fig. 3C] is a graph showing a correlation between a PWM value relating to the LED and a luminance of light emitted by the LED based on a light source red video signal that has been subjected to correction processing in consideration of self-heat generation of the red light emitting LED chip and heat generation of a green light emitting LED chip, and a light source green video signal · a light source blue video signal, which have not been subjected to correction processing.
[Fig. 4] is a diagram explaining that only a light source red video signal is subjected to correction processing in consideration only of self-heat generation of the red light emitting LED chip.
[Fig. 5] is a diagram explaining that a light source red video signal · a light source green video signal · a light source blue video signal are each subjected to correction processing in consideration only of self-heat generation of a corresponding one of the LED chips.
[Fig. 6] is a diagram explaining that only a light source red video signal is subjected to correction processing in consideration of self-heat generation of the red light emitting LED chip and heat generation of the green light emitting LED chip.
[Fig. 7A] is a graph showing a correlation between a PWM value relating to the LED and a chromaticity (x) of white light emitted by the LED based on a light source red video signal · a light source green video signal · a light source blue video signal, which have not been subjected to correction processing.
[Fig. 7B] is a graph showing a correlation between a PWM value relating to the LED and a chromaticity (x) of white light emitted by the LED based on a light source red video signal that has been subjected to correction processing in consideration only of self-heat generation of the red light emitting LED chip, and a light source green video signal · a light source blue video signal, which have not been subjected to correction processing.
[Fig. 7C] is a graph showing a correlation between a PWM value relating to the LED and a chromaticity (x) of light emitted by the LED based on a light source red video signal that has been subjected to correction processing in consideration of self-heat generation of the red light emitting LED chip and heat generation of the green light emitting LED chip, and a light source green video signal · a light source blue video signal, which have not been subjected to correction processing.
[Fig. 8A] is a graph showing a correlation between a PWM value relating to the LED and a chromaticity (y) of white light emitted by the LED based on a light source red video signal · a light source green video signal · a light source blue video signal, which have not been subjected to correction processing.
[Fig. 8B] is a graph showing a correlation between a PWM value relating to the LED and a chromaticity (y) of white light emitted by the LED based on a light source red video signal that has been subjected to correction processing in consideration only of self-heat generation of the red light emitting LED chip, and a light source green video signal · a light source blue video signal, which have not been subjected to correction processing.
[Fig. 8C] is a graph showing a correlation between a PWM value relating to the LED and a chromaticity (y) of light emitted by the LED based on a light source red video signal that has been subjected to correction processing in consideration of self-heat generation of the red light emitting LED chip and heat generation of the green light emitting LED chip, and a light source green video signal · a light source blue video signal, which have not been subjected to correction processing.
[Fig. 9] is a diagram explaining that only a light source red video signal is subjected to correction processing in consideration of self-heat generation of the red light emitting LED chip, heat generation of the green light emitting LED chip, and heat generation of a blue light emitting LED chip.

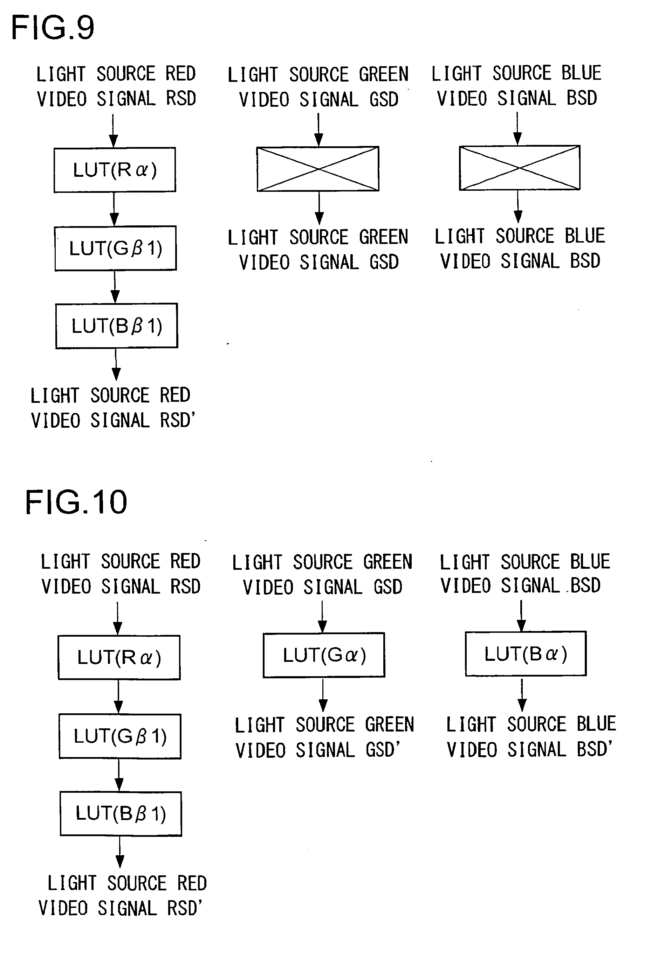

[Fig. 10] is a diagram explaining that a light source red video signal is subjected to correction processing in consideration of self-heat generation of the red light emitting LED chip, heat generation of the green light emitting LED chip, and heat generation of the blue light emitting LED chip, a light source green video signal is subjected to correction processing in consideration only of self-heat generation of the green light emitting LED chip, and a light source blue video signal is subjected to correction processing in consideration only of self-heat generation of the blue light emitting LED chip.

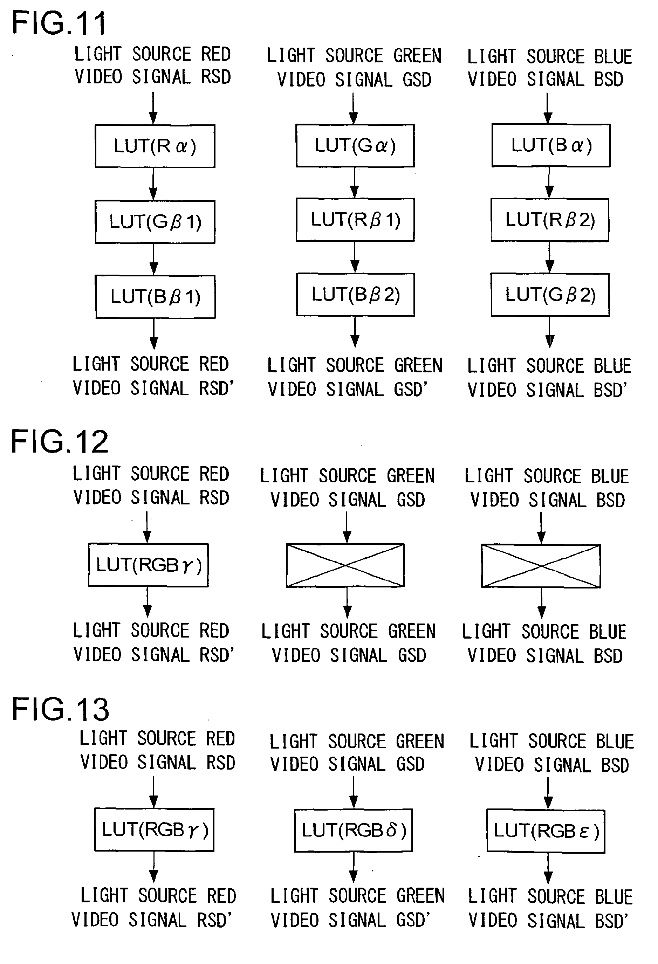

[Fig. 11] is a diagram explaining that a light source red video signal is subjected to correction processing in consideration of self-heat generation of the red light emitting LED chip, heat generation of the green light emitting LED chip, and heat generation of the blue light emitting LED chip, a light source green video signal is subjected to correction processing in consideration of self-heat generation of the green light emitting LED chip, heat generation of the red light emitting LED chip, and heat generation of the blue light emitting LED chip, and a light source blue video signal is subjected to correction processing in consideration of self-heat generation of the blue light emitting LED chip, heat generation of the red light emitting LED chip, and heat generation of the green light emitting LED chip.
[Fig. 12] is a diagram explaining that a light source red video signal is subjected to correction processing using one LUT (LUT created in consideration of self-heat generation of the red light emitting LED chip, heat generation of the green light emitting LED chip, and heat generation of the blue light emitting LED chip).
[Fig. 13] is a diagram explaining that a light source red video signal · a light source green video signal · a light source blue video signal are each subjected to correction processing using one LUT (LUT created in consideration of self-heat generation of a corresponding one of the LED chips and heat generation of two LED chips among the LED chips other than the corresponding one of the LED chips).
[Fig. 14] is a diagram explaining that a light source red video signal is subjected to correction processing using one LUT (LUT created in consideration of self-heat generation of the red light emitting LED chip and heat generation of the green light emitting LED chip).
[Fig. 15] is a block diagram showing various members included in a liquid crystal display device.
[Fig. 16] is an exploded perspective view of the liquid crystal display device.
[Fig. 17] is an exploded perspective view of the liquid crystal display device.
[Fig. 18] is an exploded perspective view showing part of a backlight unit included in the liquid crystal display device.
[Fig. 19A] is a front view of the LED in which the LED chips are arranged from one end to the other in a GRGB arrangement.
[Fig. 19B] is a front view of the LED in which the LED chips are arranged from the one end to the other in a GRBG arrangement.
[Fig. 19C] is a front view of the LED in which the LED chips are arranged from the one end to the other in a RGGB arrangement.

### Description of Embodiments

### [Embodiment 1]

The following describes one embodiment with reference to the appended drawings. In some of the drawings, reference signs of members, etc. are omitted for the sake of convenience, in which case reference should be made to the other drawings. Furthermore, numerical values used in examples described in the following are only illustrative without any limitation thereto.

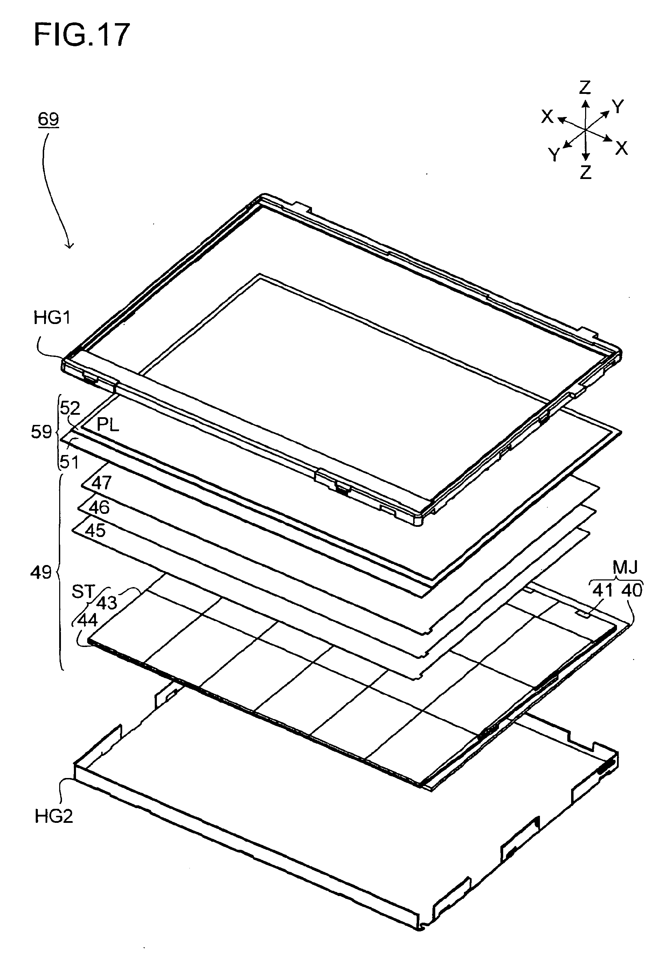

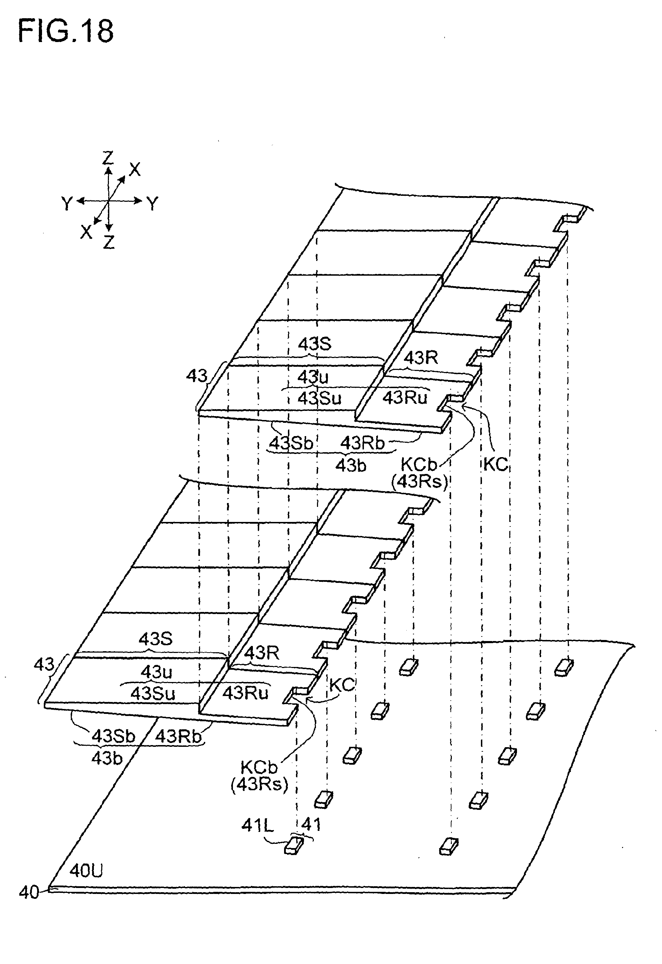

Fig. 17 is an exploded perspective view showing a liquid crystal display device 69 (for the sake of convenience, the figure shows only a relatively small number of light guide plates 43, which will be described later). Furthermore, Fig. 18 is an exploded perspective view showing part of a backlight unit 49 included in the liquid crystal display device 69.

As shown in Fig. 17, the liquid crystal display device 69 includes a liquid crystal display panel 59, the backlight unit 49, and a housing HG (HG1 HG2) by which the liquid crystal display panel 59 and the backlight unit 49 are sandwiched.

The liquid crystal display panel 59 adopts the active matrix system. The liquid crystal display panel 59 is therefore formed by sandwiching liquid crystal (not shown) between an active matrix substrate 51 to which an unshown active element such as a TFT (thin film transistor) is mounted and an opposed substrate 52 opposed to the active matrix substrate 51. That is, the active matrix substrate 51 and the opposed substrate 52 are substrates for sandwiching liquid crystal therebetween and are made of transparent glass or the like.

An unshown sealing material is applied to the respective outer edges of the active matrix substrate 51 and the opposed substrate 52, so that the liquid crystal is sealed therebetween by the sealing material. Furthermore, a polarization film PL is attached so as to sandwich the active matrix substrate 51 and the opposed substrate 52.

Being a non-light emitting type display panel, the liquid crystal display panel 59 receives light (backlight light) from the backlight unit 49 and thereby fulfills a display function. Thus, allowing the entire surface of the liquid crystal display panel 59 to be irradiated uniformly with light from the backlight unit 49 improves display quality of the liquid crystal display panel 59.

The above-described backlight unit 49 includes an LED module MJ, a light guide plate set ST, a diffusion sheet 45, and prism sheets 46 · 47.

The LED module MJ is a module that emits light and includes, as shown in Fig. 18 that is a partially enlarged exploded perspective view, a mounting substrate 40 and an LED (light emitting diode) 41 that is mounted on an electrode formed on a mounting substrate surface 40U of the mounting substrate 40 so as to be supplied with an electric current and thus emits light.

Furthermore, in order to secure the amount of light, it is preferable that the LED module MJ includes a plurality of the LEDs (light sources) 41 that are light emitting elements, and it is more preferable that the LEDs 41 are arranged to form a matrix. In the figure, however, only some of the LEDs 41 are shown for the sake of convenience (in the following description, a direction in which the LEDs 41 are arranged is referred to as an X direction, and a direction intersecting (for example, orthogonal to) the X direction is referred to as a Y direction).

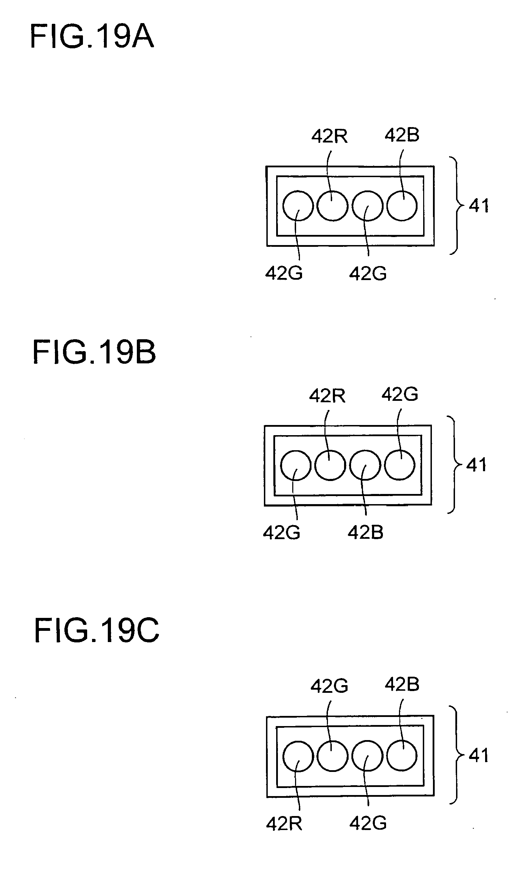

There is no particular limitation on the type of the LED 41 used. As an example of the LED 41, an LED can be used in which, as shown in a front view of the LED 41 in Fig. 19A, one red light emitting (R) LED chip 42R, two green light emitting (G) LED chips 42G, and one blue light emitting (B) LED chip 42B are arranged, and white light is generated by mixing light of their respective colors (an arrangement in which, as shown in Fig. 19A, the LED chip 42G, the LED chip 42R, the LED chip 42G, and the LED chip 42B are arranged in this order from one end to the other is referred to as a GRGB arrangement).

The description is directed next to the light guide plate set ST. The light guide plate set ST includes the light guide plate 43 and a reflection sheet 44.

The light guide plate 43 makes light of the LED 41 incident thereon reflected multiple times and outputs it to the outside. As shown in Fig. 18, the light guide plate 43 includes a light receiving piece 43R that receives light and an output piece 43S that is connected to the light receiving piece 43R.

The light receiving piece 43R is a plate-shaped member and has a cutout KC formed at a portion of a side wall thereof. The cutout KC has a space sufficient to enclose the LED 41 therein, with a bottom KCb thereof opposed to a light emitting surface 41 L of the LED 41. Thus, when the LED 41 is mounted so as to be fitted into the cutout KC, the bottom KCb of the cutout KC functions as a light receiving surface 43Rs of the light guide plate 43. Of two surfaces of the light receiving piece 43R, which sandwich the side walls of the light receiving piece 43R therebetween, one facing toward the mounting substrate 40 is indicated as a bottom surface 43Rb, and the other on the side opposite to the bottom surface 43Rb is indicated as a top surface 43Ru.

The output piece 43S is a plate-shaped member that is side-by-side continuous with the light receiving piece 43R and is positioned downstream in a traveling direction of light incident from the light receiving surface 43Rs. The output piece 43S has a bottom surface 43Sb that is formed so as to form one surface (so as to be flush) with the bottom surface 43Rb of the light receiving piece 43R and a top surface 43Su that, on the other hand, is formed so as to be stepped above the level of the top surface 43Ru of the light receiving piece 43R.

Moreover, the top surface 43Su and the bottom surface 43Sb of the output piece 43S are not parallel to each other, but one of these is inclined with respect to the other. To be more specific, their inclination respect to each other is such that the bottom surface 43Sb is brought closer to the top surface 43 Su with increasing distance from the light receiving surface 43Rs in the light traveling direction. That is, the output piece 43S has a thickness (distance between the top surface 43Su and the bottom surface 43Sb) gradually decreasing with increasing distance from the light receiving surface 43Rs in the light traveling direction and thus is tapered (the light guide plate 43 including the output piece 43 S tapered as described above is referred to also as a wedge-shaped light guide plate 43).

The light guide plate 43 including the light receiving piece 43R and the output piece 43S, which have the above-described configurations, respectively, receives light from the light receiving surface 43Rs, makes the light reflected multiple times between a bottom surface 43b (43Rb · 43Sb) and a top surface 43u (43Ru · 43Su) thereof, and outputs it toward the outside from the top surface 43Su (light outputted from the top surface 43Su is referred to as planar light).

Depending on an incidence angle of light with respect to the bottom surface 43b, however, the light might be outputted from the bottom surface 43b. In order to prevent this, the reflection sheet 44 covers the bottom surface 43b of the light guide plate 43 so that light leaking from the bottom surface 43b is reflected back into the light guide plate 43 (in Fig. 18, the reflection sheet 44 is omitted for the sake of convenience).

The light guide plates 43 each included in the light guide plate set ST configured as above are arranged in matrix form so as to correspond to the LEDs 41. Particularly in a case where the light guide plate sets ST are arranged along the Y direction in this manner, each of the top surfaces 43Ru of the light receiving pieces 43R supports a corresponding one of the bottom surfaces 43Sb of the output pieces 43S, so that the top surfaces 43Su are assembled to form one surface (the top surfaces 43Su are assembled to be flush with one another).

Also in a case where the light guide plate sets ST are arranged along the X direction, the top surfaces 43Su are assembled to complete one surface. As a result, the top surfaces 43 Su of the light guide plates 43 are arranged in matrix form and thus form a relatively large light output surface (the light guide plates 43 arranged in matrix form in this manner are referred to also as tandem light guide plates 43).

The diffusion sheet 45 is positioned so as to cover the top surfaces 43Su of the light guide plates 43, which are arranged in matrix form, and diffuses planar light from the light guide plates 43 so that the light is distributed over the entire region of the liquid crystal display panel 59 (the diffusion sheet 45 and the prism sheets 46 · 47 are referred to collectively as an optical sheet group (45 to 47)).

The prism sheets 46 · 47 are each an optical sheet that has, for example, a prism shape in the plane thereof and deflects radiation characteristics of light, and are positioned so as to cover the diffusion sheet 45. The prism sheets 46 · 47 therefore condense light traveling from the diffusion sheet 45 and thus provide improved luminance. Light condensed by the prism sheet 46 and light condensed by the prism sheet 47 are diverged in directions intersecting each other, respectively.

The description is directed next to the housing HG. A front housing HG1 and a rear housing HG2, which constitute the housing HG, sandwich therebetween the backlight unit 49 configured as above and the liquid crystal display panel 59 covering the backlight unit 49 so as to fix them (there is no particular limitation on how they are fixed). That is, the front housing HG1, together with the rear housing HG2, sandwiches the backlight unit 49 and the liquid crystal display panel 59, and thus the liquid crystal display device 69 is completed.

The rear housing HG2 houses the light guide plate sets ST, the diffusion sheet 45, and the prism sheets 46 · 47 layered in this order in a direction referred to as a Z direction (the X direction, the Y direction, and the Z direction may be orthogonal to one another).

In the backlight unit 49 configured as above, light from the LED 41 passes through the light guide plate set ST to be outputted as planar light, and the planar light passes through the optical sheet group (45 to 47) to be outputted as backlight light having an increased light emission luminance. The backlight light then reaches the liquid crystal display panel 59, and thus the liquid crystal display panel 59 displays an image using the backlight light.

By the way, the backlight unit (tandem type backlight unit) 49 including the tandem light guide plates 43 can control output light of each of the light guide plates 43 and thus allows partial irradiation of a display region of the liquid crystal display panel 59. It can therefore be said that the backlight unit 49 having this configuration is of an area active type.

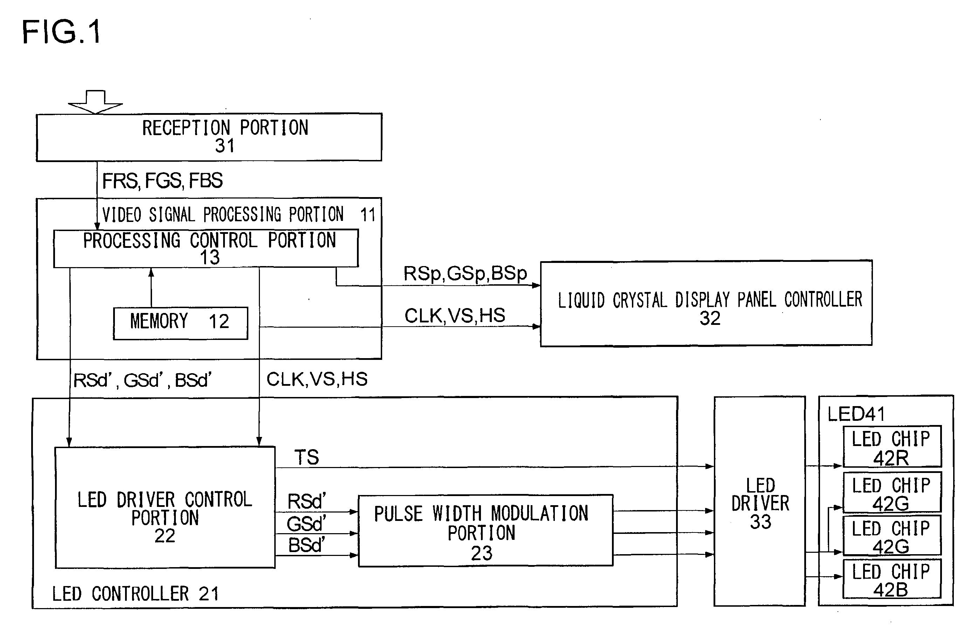

Referring to Figs. 1 to 14, the following describes light emission control performed by the above-described area active type backlight unit 49.

Fig. 1 is a block diagram showing various members included in the liquid crystal display device 69 (Fig. 1 shows one of the plurality of the LEDs 41 included). As shown in Fig. 1, the liquid crystal display device 69 includes a reception portion 31, a video signal processing portion (control portion) 11, a liquid crystal display panel controller 32, an LED controller 21, an LED driver 33, and the LED 41.

The reception portion 31 receives a video/audio signal such as, for example, a television broadcast signal (see a hollow arrow) (in the following, a video signal included in a video/audio signal is mainly described). The reception portion 31 then transmits the received video signal to the video signal processing portion 11.

Herein, for the sake of convenience, the video signal transmitted to the video signal processing portion 11 is referred to as a fundamental video signal (image data), and, of color video signals (fundamental color video signals) included in the fundamental video signal, a signal representing a red color, a signal representing a green color, and a signal representing a blue color are referred to as a fundamental red video signal FRS, a fundamental green video signal FGS, and a fundamental blue video signal FBS, respectively.

The video signal processing portion 11 includes a memory 12 and a processing control portion (control portion) 13. The memory 12 stores a look-up table (LUT) required for signal correction processing performed by the processing control portion 13. The LUT will be described later in detail.

Based on the received fundamental color video signals (image data), the processing control portion 13 generates a processed video signal. The processing control portion 13 then transmits the processed video signal to each of the liquid crystal display panel controller 32 and the LED controller 21.

The processed video signal includes, for example, processed color video signals (processed red video signal RS, processed green video signal GS, processed blue video signal BS) obtained by processing the fundamental color video signals (fundamental red video signal FRS, fundamental green video signal FGS, fundamental blue video signal FBS, etc.) and synchronization signals (clock signal CLK, vertical synchronization signal VS, horizontal synchronization signal HS, etc.) related to the processed color video signals.

The processed color video signals transmitted to the liquid crystal display panel controller 32 are, however, different from those transmitted to the LED controller 21. In order to make a distinction between them, the processed color video signals transmitted to the liquid crystal display panel controller 32 are referred to as a processed red video signal RSp for a panel (hereinafter, referred to as a processed panel red video signal RSp), a processed green video signal GSp for a panel (hereinafter, referred to as a processed panel green video signal GSp), and a processed blue video signal BSp for a panel (hereinafter, referred to as a processed panel blue video signal BSp), respectively.

On the other hand, the processed color video signals (light source control data) transmitted to the LED controller 21 are referred to as a red video signal RSd for a light source (hereinafter, referred to as a light source red video signal RSd), a green video signal GSd for a light source (hereinafter, referred to as a light source green video signal GSd), and a blue video signal BSd for a light source (hereinafter, referred to as a light source blue video signal BSd), respectively (specifically, these light source color video signals (RSd, GSd, BSd) are subjected to correction processing before being transmitted to the LED controller 21, which will be described later in detail).

With respect to the fundamental color video signals (FRS, FGS, FBS), the light source color video signals (RSd, GSd, BSd) and the processed panel color video signals (RSp, GSp, BSp) satisfy conditions below:

· Fundamental red video signal FRS = Processed panel red video signal RSp × Light source red video signal RSd.
· Fundamental green video signal FGS = Processed panel green video signal GSp × Light source green video signal GSd.
· Fundamental blue video signal FBS = Processed panel blue video signal BSp × Light source blue video signal BSd.

Based on the processed panel red video signal RSp, the processed panel green video signal GSp, the processed panel blue video signal BSp, and the synchronization signals related to these signals, the liquid crystal display panel controller 32 controls pixels of the liquid crystal display panel 59.

The LED controller 21 includes an LED driver control portion 22 and a pulse width modulation portion 23.

The LED driver control portion 22 transmits the light source color video signals from the video signal processing portion 11 to the pulse width modulation portion 23. The LED driver control portion 22 also generates a lighting timing signal TS representing timing for lighting the LED 41 (specifically, the LED chips 42) based on the synchronization signals (clock signal CLK, vertical synchronization signal VS, horizontal synchronization signal HS, etc.) and transmits it to the LED driver 33.

Using the pulse width modulation (PWM) method, the pulse width modulation portion 23 adjusts a light emission time of the LED 41 based on the light source color video signals. A signal value used in this pulse width modulation is referred to as a PWM signal (PWM value). Furthermore, the pulse width modulation method is a well-known method in which, for example, a backlight is driven at 120 Hz (blinking 120 times per second, period: 8.33 ms), and the operation thereof is controlled and changed in units obtained by dividing this time period of 8.33 ms by 12 bits (4096).

The LED driver 33 controls lighting of the LED 41 based on signals (PWM signals, timing signal) from the LED controller 21.

As described earlier, the LED 41 includes one LED chip 42R (for example, a first light source), two LED chips 42G (for example, second light sources), and one LED chip 42B (for example, a third light source). Using the pulse width modulation method, lighting of these LED chips 42 is controlled by the LED driver 33.

The description is now directed to correction processing using an LUT with respect to the light source color video signals (RSd, GSd, BSd). Light source color video signals (light amount adjustment data) obtained as a result of this correction processing are indicated as a red video signal RSd' for a light source (hereinafter, referred to as a light source red video signal RSd'), a green video signal GSd' for a light source (hereinafter, referred to as a light source green video signal GSd'), and a blue video signal BSd' for a light source (hereinafter, referred to as a light source blue video signal BSd'), respectively (that is, signals obtained as a result of the correction processing are each indicated by a reference sign with an apostrophe (')).

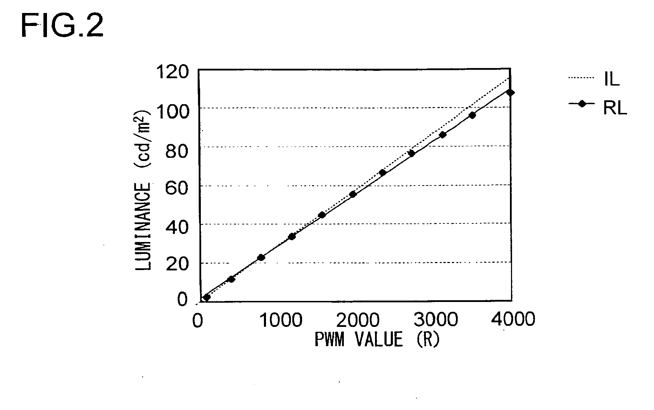

The following first describes purposes of correction processing. Typically, it is preferable that the relationship between a PWM value representing each of the light source color video signals (RSd, GSd, BSd) and the luminance of a corresponding one of the LED chips 42 that emits light based on the each of the light source color video signals is directly proportional as shown in Fig. 2 (in Fig. 2, the LED chip 42R is used as an example of the LED chips 42, and a graph line representing the directly proportional relationship is referred to as an ideal graph line IL).

In a practical sense, however, due to the influence of instantaneous heat generation caused by light emission of the LED chip 42R, the relationship between a PWM value (R) and the luminance of the LED chip 42R is not directly proportional at, for example, a ratio of 1:1 but deviates from the ideal graph line IL (a graph line representing this deviating relationship is referred to as a realistic graph line RL).

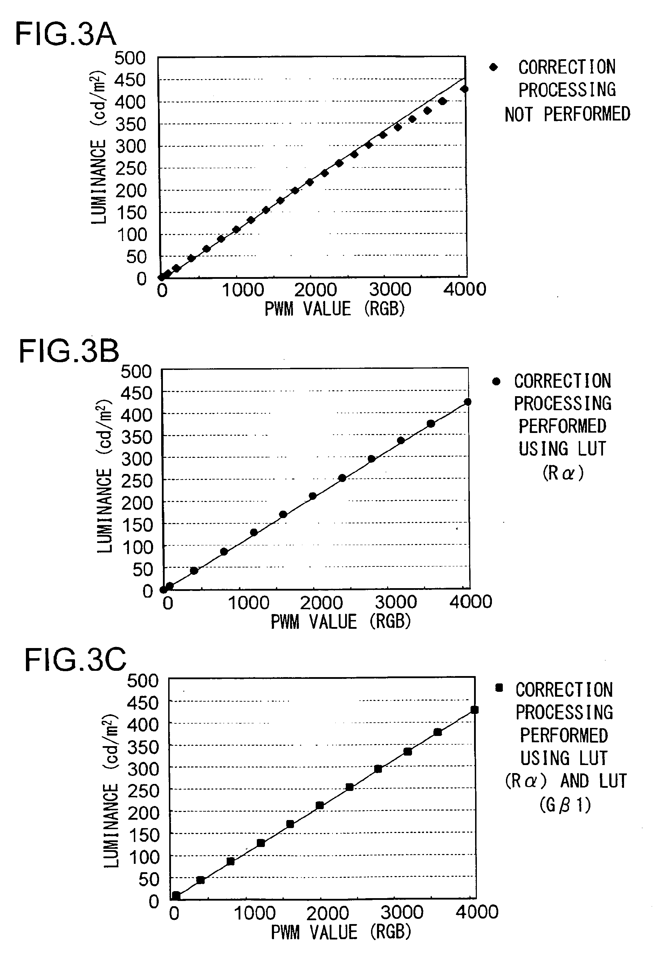

Because of this, as shown in Fig. 3A, the relationship between a PWM value of white light from the LED 41 including the above-described LED chip 42R and the luminance of the white light emitted by the LED 41 is also unlikely to achieve direct proportionality (in the figure, a PWM value (RGB) refers to a PWM value corresponding to the LED chip 42R · the LED chip 42G · the LED chip 42B as one set). It is therefore one of the purposes of correction processing to compensate for this difference (deviation in luminance) between the realistic graph line RL and the ideal graph line IL.

To be more specific, the correction processing with respect to the light source color video signals (RSd, GSd, BSd) is intended to bring the relationship represented by the graph line in Fig. 3A to a state where direct proportionality is achieved. This correction processing can be performed in various forms, an example of which is correction processing using a generally known look-up table (it can be said that such a look-up table is used to perform, for the above-described purpose, correction processing based on the relationship between a PWM value (the amount of output light, in other words, the amount of heat generation) representing each of the light source color video signals and luminance).

The following describes, as an example of the correction processing, an exemplary case of performing correction processing with respect to the light source red video signal RSd related to the LED chip 42R among the three types of LED chips 42. For ease of understanding, correction processing as a comparative example is also described.

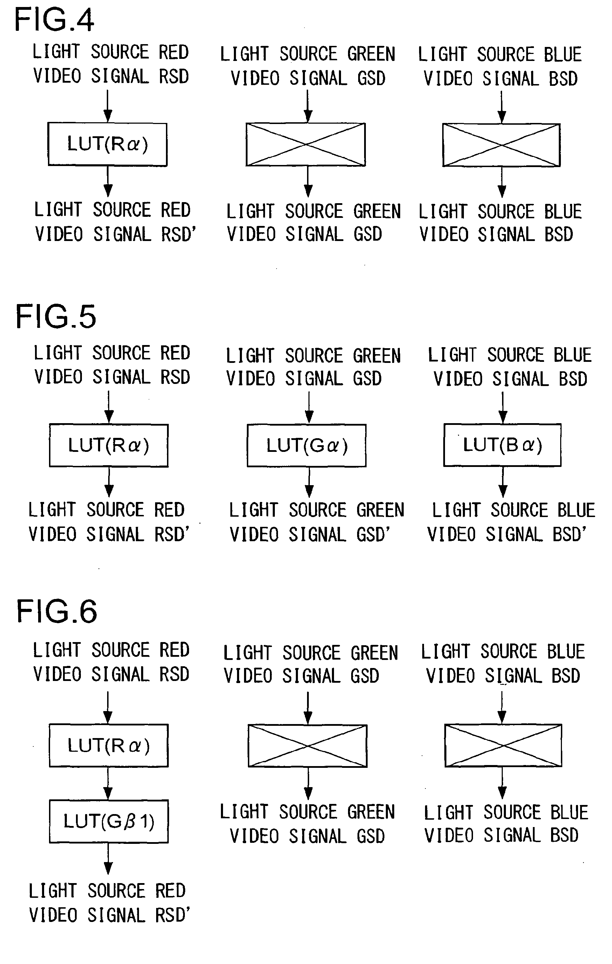

Furthermore, Figs 4 to 6 are diagrams explaining the above-described correction processing, i.e. that the light source red video signal (a piece of the light source control data) RSd is changed into the light source red video signal (a piece of the light amount adjustment data) RSd' by the correction processing using an LUT (in the figures, a quadrangular shape signifying an LUT, if marked with crossed lines inside, indicates that the correction processing using an LUT is not performed).

The following first describes the correction processing as the comparative example. In this correction processing, using an LUT (Ra), correction is performed so that the difference (deviation in luminance) between the realistic graph line RL and the ideal graph line IL shown in Fig. 3A is eliminated ("R","G", and "B" each enclosed in parentheses following "LUT" indicate the respective colors of light emitted by the LED chips 42, on the basis of which corresponding LUTs are created, and "a" to "e" and "1" · "2" following any of "R","G", and "B" indicate types of the LUTs).

To be more specific, as shown in Fig. 4, the light source red video signal RSd is subjected to the correction processing using the LUT (Ra) and thus is changed into the light source red video signal RSd'. On the other hand, the light source green video signal GSd and the light source blue video signal BSd are not subjected to the correction processing using LUTs and thus remain in uncorrected states as the light source green video signal GSd and the light source blue video signal BSd, respectively (since they are uncorrected, an apostrophe (') is not affixed to each of their reference signs). In this connection, Fig. 5 shows a case where, in addition to the LED chip 42R, the LED chips 42G · 42B are subjected to correction using an LUT (Ga) · an LUT (Ba), respectively.

In a case where the correction processing shown in Fig. 4 is performed, the relationship between a PWM value of white light and the luminance of the white light as shown in Fig. 3A is brought to a state shown in Fig. 3B. A comparison between Figs. 3A and 3B shows that the relationship between the PWM value and the luminance has now been brought to a state where an increased degree of direct proportionality is achieved. It still cannot be said, however, that a sufficient degree of direct proportionality is achieved by this relationship. That is why correction processing shown in Fig. 6 is performed.

In the correction processing shown in Fig. 6, unlike the correction processing shown in Fig. 4, the light source red video signal RSd is subjected not only to the correction processing using the LUT (Ra) but also to correction processing using an LUT (Gβ1) (specifically, the light source red video signal RSd is subjected also to the correction processing using the LUT (Gβ1) created based on a PWM value representing the light source green video signal GSd (another piece of the light source control data)).

The reason why performing a plurality of types of correction processing as in the above-described manner is preferable is that light of the LED chip 42R is affected not only by instantaneous self-heat generation of the LED chip 42R itself but also by instantaneous heat generation of another LED chip(s) 42 among the LED chips 42 adjacent to the LED chip 42R.

For example, in a case where the LED chips 42 are arranged as shown in Fig. 19A, the LED chip 42R (first light source) is affected not only by self-heat generation but also by heat generation of the two LED chips 42G (another light source(s) other than the first light source).

For the above-described reason, the light source red video signal RSd corresponding to the LED chip 42R is subjected to the correction processing using the LUT (Ra) (fundamental correction processing) and further to the correction processing using the LUT (Gβ1) created in consideration of the influence exerted by the two LED chips 42G (additional correction processing) and thus is changed into the light source red video signal RSd' (the bottom line is that the light source red video signal RSd' is generated in consideration of the amount of instantaneous heat generation of the LED chip 42R and the amounts of instantaneous heat generation of the LED chips 42G · 42G positioned on the periphery of the LED chip 42R).

That is, in the backlight unit 49, with respect to a light source color video signal relating to one of the LED chips 42, the processing control portion 13 (accordingly, the video signal processing portion 11) performs correction processing based on the relationship between the light source color video signal and the luminance of the one of the LED chips 42 (fundamental correction processing) using an LUT (for example, the LUT (Ra)) and further performs correction processing based on a light source color video signal(s) relating to another LED chip(s) 42 among the LED chips 42 other than the one of the LED chips 42 (additional correction processing) using an LUT (for example, the LUT (Gβ1)). Thus, the former light source color video signal is changed into a new light source color video signal.

With this configuration, as can be seen from Fig. 3C, compared with the relationships shown in Figs. 3A and 3B, the relationship between a PWM value of white light emitted from the LED 41 and the luminance of the white light is brought to a state where a further increased degree of direct proportionality is achieved. This prevents output light (white light) from the backlight unit 49 from including unevenness in luminance over the entire luminance range.

Moreover, the quality in terms of a chromaticity (x) and a chromaticity (y) of white light from the backlight unit 49 is also improved (the chromaticity (x) and the chromaticity (y) refer to chromaticity values according to the CIE Yxy chromaticity diagram defined by the CIE (Commission Internationale de l'Eclairage)).

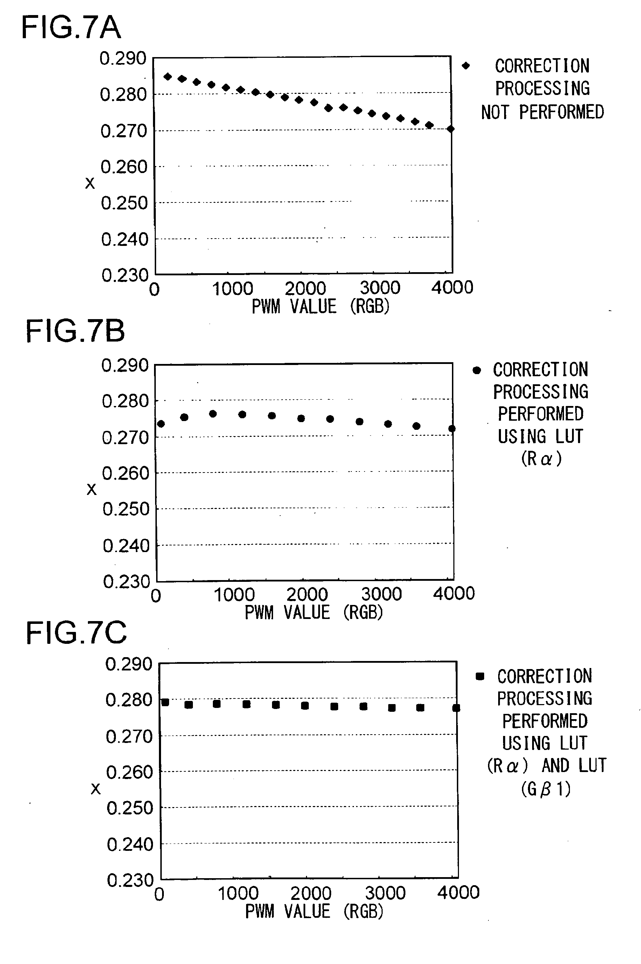

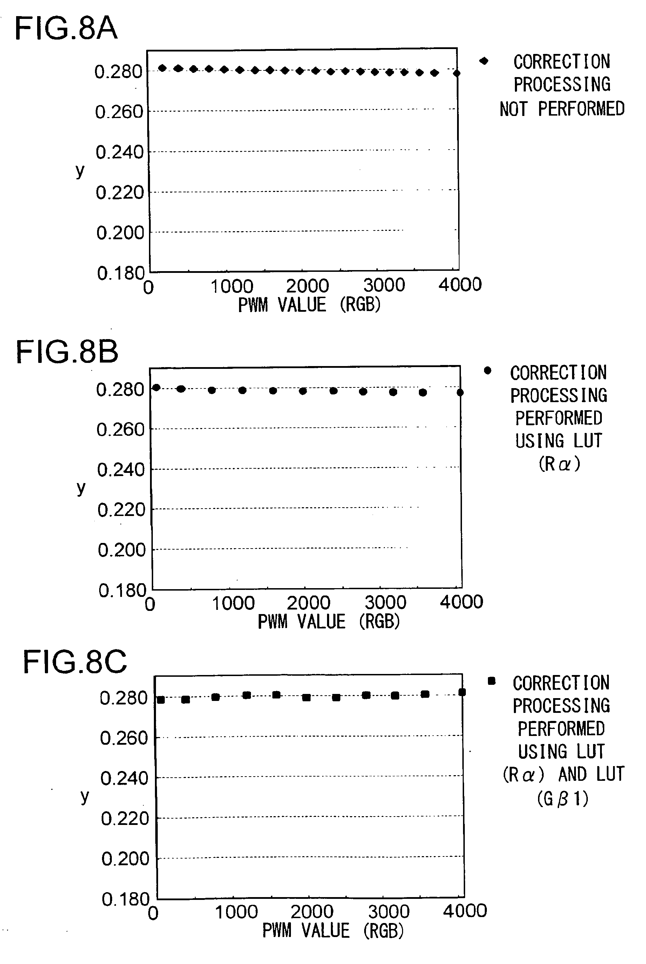

Typically, the relationship between a PWM value and the chromaticity (x) of the LED 41, which is shown in Fig. 7A, and the relationship between the PWM value and the chromaticity (y) of the LED 41, which is shown in Fig. 8A, might vary depending on the PWM value. Essentially, however, it is preferable that constant values of the chromaticities (x) and (y) are obtained regardless of a PWM value. Hence, for example, it is assumed that the correction processing shown in Fig. 4 is performed with respect to the light source red video signal RSd.

In this case, as shown in Fig. 7B illustrating the result of this correction processing, in the relationship between the PWM value and the chromaticity (x) of the LED 41, the dependence of the chromaticity (x) on the PWM value is reduced. Furthermore, as shown in Fig. 8B similarly illustrating the result of the correction processing, also in the relationship between the PWM value and the chromaticity (y) of the LED 41, the dependence of the chromaticity (y) on the PWM value is reduced. It still cannot be said, however, that the dependence is eliminated to a sufficient degree. Hence, it is assumed that the correction processing shown in Fig. 6 is performed with respect to the light source red video signal RSd.

In this case, as shown in Fig. 7C illustrating the result of this correction processing, the dependence of the chromaticity (x) on the PWM value is further reduced compared with the result illustrated in Fig. 7B. Furthermore, as shown in Fig. 8C similarly illustrating the result of the correction processing, the dependence of the chromaticity (y) on the PWM value is further reduced compared with the result illustrated in Fig. 8B. That is, the dependence of the chromaticities (x) and (y) of white light emitted from the LED 41 on a PWM value of the white light is eliminated. This prevents output light from the backlight unit 49 from including not only unevenness in luminance but also unevenness in chromaticity.

In the foregoing example, based on the arrangement of the LED chips 42 in the LED 41 shown in Fig. 19A, the LUT (Gβ1) used to correct the light source red video signal RSd is created in consideration of instantaneous thermal influence exerted by the two LED chips 42G · 42G on the LED chip 42R. There is, however, no limitation thereto. That is, the LUT (Gβ1) may also be created in consideration of thermal influence exerted by one of the LED chips 42G.

This also implies that, in creating the LUT (Gβ1), thermal influence exerted by one of the two LED chips 42G · 42G and thermal influence exerted by the other of the two LED chips 42G · 42G may be taken into consideration at a varying ratio. That is, in creating the LUT (Gβ1), thermal influence exerted by the one of the two LED chips 42G · 42G and thermal influence exerted by the other of the two LED chips 42G · 42G may be taken into consideration at a ratio of 1 : 1 or at a ratio of 0 : 1 (or 1 : 0) (of course, ratios other than these may also be used to create the LUT (Gβ1)).

Furthermore, as shown in Fig. 9, the light source red video signal RSd may be subjected to, in addition to the correction processing using the LUT (Ra) and the LUT (Gβ1), correction processing using an LUT (Bβ1) (additional correction processing) (specifically, the light source red video signal RSd is subjected also to the correction processing using the LUT (Bβ1) created based on a PWM value representing the light source blue video signal BSd).

This can provide higher quality in terms of the luminance and chromaticity of output light from the backlight unit 49. Based on the arrangement of the LED chips 42 in the LED 41 shown in Fig. 19A, the LUT (Bβ1) used to correct the light source red video signal RSd is created in consideration of instantaneous thermal influence exerted by the one LED chip 42B on the LED chip 42R.

By the way, in general, as for the difference between the realistic graph line RL and the ideal graph line IL shown in Fig. 2, among the LED chips 42, the LED chip 42R exhibits the most significant difference, the LED chip 42G exhibits the second most significant difference, and the LED chip 42B exhibits the least significant difference (that is, in terms of the likelihood that variations in luminance occur under thermal influence, the LED chips 42 are ranked in the following descending order: LED chip 42R > LED chip 42G > LED chip 42B).

Furthermore, in terms of the amount of instantaneous heat generation, the LED chips 42 are ranked in the descending order of the LED chip 42G, the LED chip 42R, and the LED chip 42B (that is, LED chip 42G > LED chip 42R > LED chip 42B).

Based on the above, it can be said that, in a case of the LED 41 in which the LED chips 42 are arranged in the GRGB arrangement as shown in Fig. 19A, subjecting the light source red video signal RSd corresponding to the LED chip 42R to, for example, the correction processing of the types shown in Figs. 4 and 6 allows high quality in terms of the luminance, chromaticity, and the like of white light to be obtained most efficiently. There is, however, no limitation thereto, and a light source color video signal(s) corresponding to an LED chip(s) 42 among the LED chips 42 other than the LED chip 42R may also be subjected to correction processing.

For example, correction processing may also be performed as shown in Fig. 10. That is, the light source red video signal RSd is changed into the light source red video signal RSd' by the correction processing using the LUT (Ra) · the LUT (Gβ1) · the LUT (Bβ1), the light source green video signal GSd is changed into the light source green video signal GSd' by correction processing using an LUT (Ga), and the light source blue video signal BSd is changed into the light source blue video signal BSd' by correction processing using an LUT (Ba) (similarly to the LUT (Ra), the LUT (Ga) · the LUT (Ba) are used to perform correction processing based on the relationship between a PWM value representing the light source color video signal relating to the LED chip 42G and the luminance of the LED chip 42G and on the relationship between a PWM value representing the light source color video signal relating to the LED chip 42B and the luminance of the LED chip 42B, respectively).

Furthermore, correction processing may also be performed as shown in Fig. 11. That is, the light source red video signal RSd is changed into the light source red video signal RSd' by the correction processing using the LUT (Ra) · the LUT (Gβ1) · the LUT (Bβ1). Further, the light source green video signal GSd is changed into the light source green video signal GSd' by correction processing using the LUT (Ga) · an LUT (Rβ1) · an LUT (Bβ2). Further, the light source blue video signal BSd is changed into the light source blue video signal BSd' by correction processing using the LUT (Ba) · an LUT (Rβ2) · an LUT (Gβ2) (each of the LUT (Rβ1) · the LUT (Rβ2) · the LUT (Gβ2) · the LUT (Bβ2) is an LUT created based on a PWM value representing a light source color video signal of a corresponding one of the respective colors).

Furthermore, in the foregoing description, the correction processing is performed using a plurality of LUTs. There is, however, no limitation thereto. For example, as shown in Fig. 12, the light source red video signal RSd may be subjected to correction processing using one LUT (RGBγ). The LUT (RGBγ) is an LUT created based on the relationship between the light source red video signal RSd and the luminance of the LED chip 42R, also based on the light source green video signal GSd relating to the LED chip 42G, and further based on the light source blue video signal BSd relating to the LED chip 42B.

That is, in this correction processing using the LUT (RGBγ) with respect to the light source red video signal RSd, with respect to the light source red video signal RSd, the correction processing based on the relationship between the light source red video signal RSd and the luminance of the LED chip 42R (fundamental correction processing) is performed, and correction processing based on the light source green video signal GSd and the light source blue video signal BSd (additional correction processing) further is performed (the bottom line is that the LUT (RGBγ) is an example of an LUT for correction processing as a combination of the fundamental correction processing and the additional correction processing). This type of correction processing using the LUT (RGBγ) is preferable in that it can save a storage capacity of the memory 12, which is used for storing LUTs.

As the LUT (RGBγ), an LUT created by, for example, combining the LUT (Ra) · the LUT (Gβ1) the LUT (Bβ1) shown in Fig. 9 may also be used. Furthermore, as the LUT (RGBγ), an LUT created in consideration of the respective degrees of influence of lighting of the LED chip 42R, the LED chip 42G, and the LED chip 42B may also be used. That is, correction processing with respect to the light source red video signal RSd may use, as the LUT (RGBγ), the LUT created by a weighted computation in which the degree of influence of lighting is weighted.

Furthermore, naturally, correction processing may also be performed as shown in Fig. 13. That is, the light source red video signal RSd is changed into the light source red video signal RSd' by the correction processing using the LUT (RGBγ), the light source green video signal GSd is changed into the light source green video signal GSd' by correction processing using an LUT (RGBd), and the light source blue video signal BSd is changed into the light source blue video signal BSd' by correction processing using an LUT (RGBe).

The LUT (RGBd) is an LUT created based on the relationship between the light source green video signal GSd and the luminance of the LED chip 42G, also based on the light source red video signal RSd relating to the LED chip 42R, and further based on the light source blue video signal BSd relating to the LED chip 42B. Furthermore, the LUT (RGBe) is an LUT created based on the relationship between the light source blue video signal BSd and the luminance of the LED chip 42B, also based on the light source red video signal RSd relating to the LED chip 42R, and further based on the light source green video signal GSd relating to the LED chip 42G.

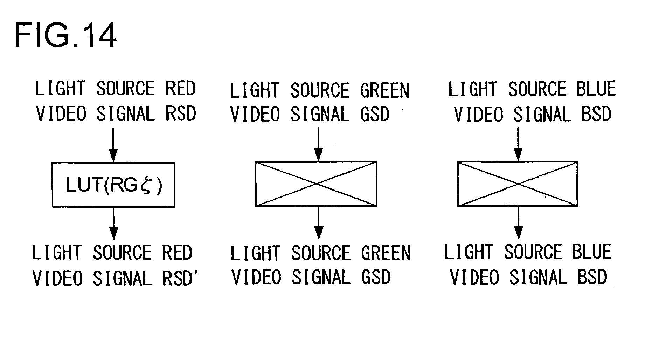

Furthermore, each of the LUTs shown in Figs. 12 and 13 is created, with respect to one light source color video signal, in consideration of the influence exerted by two LED chips 42 among the LED chips 42, which are different from one of the LED chips 42 corresponding to the one light source color video signal. There is, however, no limitation thereto. Needless to say, an LUT shown in Fig. 14 may also be used that is created, with respect to one light source color video signal, in consideration of the influence exerted by one LED chip 42 among the LED chips 42, which is different from one of the LED chips 42 corresponding to the one light source color video signal.

An LUT (RGζ) shown in Fig. 14 is an LUT created based on the relationship between the light source red video signal RSd and the luminance of the LED chip 42R and also based on the light source green video signal GSd relating to the LED chip 42G.

### [Other Embodiments]

The present invention is not limited to the foregoing embodiment, and various changes may be made thereto without departing from the spirit of the present invention.

For example, as for the reception portion 31, the video signal processing portion 11, the liquid crystal display panel controller 32, and the LED driver 33, which are shown in Fig. 1, part or all of these members may be mounted on the liquid crystal display panel 59 or in the backlight unit 49. The bottom line is that these members are only required to be mounted in the liquid crystal display device 69. In a case, however, where any of the foregoing types of correction processing is performed by the backlight unit 49 alone, at least the reception portion 31 and the video signal processing portion 11 are mounted in the backlight unit 49.

Furthermore, the arrangement and number of the LED chips 42 in the LED 41 are not limited to the GRGB arrangement shown in Fig.19A. For example, the LED 41 may also adopt a GRBG arrangement shown in Fig. 19B (first light source: LED chip 42R, second light source: LED chips 42G · 42B, third light source: LED chip 42G) or an RGGB arrangement shown in Fig. 19C (first light source: LED chip 42R, second light source: LED chip 42G, third ling source: LED chip 42G).

Furthermore, the LED 41 may also be configured to include the LED chip 42R · the LED chip 42G · the LED chip 42B (that is, three LED chips 42 in total), which are required for the generation of white light. Furthermore, the LED 41 may also be configured to include five or more LED chips 42 in total including the LED chip 42R · the LED chip 42G · the LED chip 42B.

The bottom line is that, as for the arrangement and number of the LED chips 42 (42R · 42G · 42B), various cases are possible. As described earlier, however, it can be said that, in a case where the LED chip 42R and the LED chip 42G are adjacent to each other, subjecting the light source red video signal RSd corresponding to the LED chip 42R to correction processing allows high quality in terms of the luminance, chromaticity, and the like of white light to be obtained most efficiently.

Furthermore, in each of the foregoing types of correction processing using LUTs, the video signal processing portion 11, performs, to be more specific, in the video signal processing portion 11, the processing control portion 13 performs correction processing using an LUT stored in the memory 12. There is, however, no limitation thereto. For example, correction processing may also be performed in the following manner. That is, the memory 12 is incorporated not in the video signal processing portion 11 but in the LED controller 21, and the video signal processing portion 11 performs correction processing using an LUT stored in the memory 12 in the LED controller 21.

Furthermore, in the foregoing description, the light source color video signals obtained as a result of correction processing (RSd', BSd', GSd') are transmitted to the LED driver control portion 22 in the LED controller 21. That is, correction processing is performed upstream of the LED driver control portion 22. There is, however, no limitation thereto.

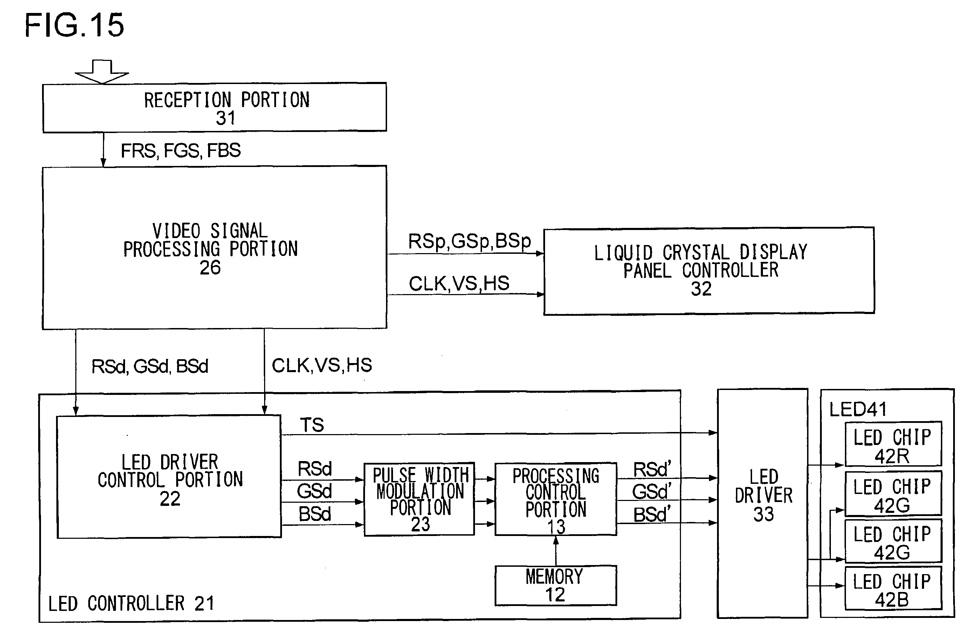

For example, a configuration shown in Fig. 15 may also be adopted. That is, the processing control portion 13 and the memory 12 are incorporated in the LED controller 21, and with respect to the light source color video signals (RSd, BSd, GSd) transmitted from the pulse width modulation portion 23, the processing control portion 13 (accordingly, the LED controller 21) performs correction processing using LUTs and transmits the light source color video signals obtained as a result of the correction processing (RSd', BSd', GSd') to the LED driver 33.

With this configuration, the light source color video signals (RSd, BSd, GSd) that have been subjected to various types of correction processing such as a γ correction before reaching the pulse width modulation portion 23 are taken into consideration in performing any of the foregoing types of correction processing using LUTs. This increases the accuracy of the light source color video signals obtained as a result of correction processing (RSd', BSd', GSd') and thus reliably prevents output light from the backlight unit 49 from including unevenness in luminance and in chromaticity.

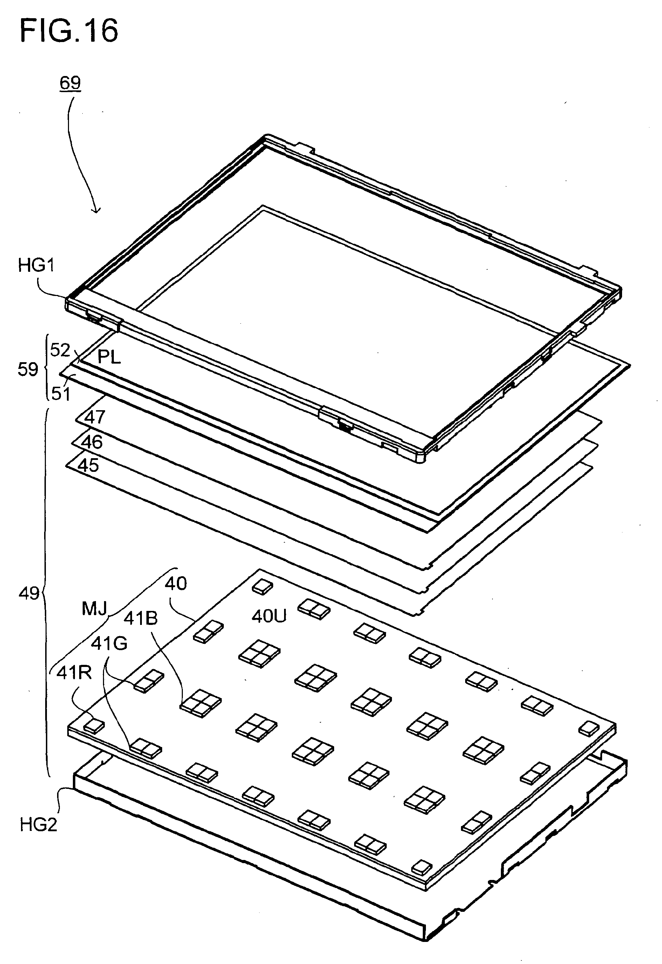

Furthermore, the foregoing describes, as an example, the tandem type backlight unit 49 in which the wedge-shaped light guide plates 43 are laid. There is, however, no limitation thereto. For example, a configuration shown in Fig. 16 may also be adopted. That is, in the backlight unit 49, an LED 41R, an LED 41G, an LED 41G, and an LED 41B that are light sources together generate white light by mixing light of their respective colors and output the light directly to the optical sheet group (45 to 47) ("R", "G", and "B" affixed to "LED 41" indicate the respective colors of light emitted by the LEDs 41). That is, a direct type backlight unit may be used as the backlight unit 49.

Furthermore, in the foregoing description, the reception portion 31 receives a video/audio signal such as a television broadcast signal, and a video signal included in the signal is processed by the video signal processing portion 11. It can therefore be said that the liquid crystal display device 69 having this configuration is a television broadcasting receiving device. Video signals processed by the liquid crystal display device 69, however, are not limited to television broadcasts. The liquid crystal display device 69 may process, for example, video signals contained in a recording medium on which a content such as a movie is recorded or video signals transmitted via the Internet.

By the way, the video signal processing portion 11 (or the LED controller 21) incorporating the processing control portion 13 therein performs correction processing by way of a data generating program. The data generating program is a computer-executable program and may be recorded on a computer-readable recording medium. The reason for this is that the program as recorded on a recording medium provides excellent portability.

Such a recording medium is typified by, for example, demountable tapes including a magnetic tape, a cassette tape, and the like, disks including a magnetic disk and an optical disk such as a CD-ROM, cards including an IC card (including a memory card), an optical card, and the like, or semiconductor memories including a flash memory and the like.

Furthermore, a configuration may also be adopted in which the processing control portion 13 acquires the data generating program through communication from a communication network. Examples of such a communication network include the Internet and infrared communication networks, regardless of whether they are wired or wireless.

### List of Reference Signs

- 11: Video signal processing portion (Control portion)
- 12: Processing control portion (Control portion)
- 13: Memory (Control portion)
- 21: LED controller (Control portion)
- 22: LED driver control portion
- 23: Pulse width modulation portion
- 31: Reception portion
- 32: Liquid crystal display panel controller
- 33: LED chip driver
- 41: LED (Light source)
- 41R: Red light emitting LED (First light source, another light source, second · third light source)
- 41G: Green light emitting LED (First light source, another light source, second · third light source)
- 41B: Blue light emitting LED (First light source, another light source, second · third light source)
- 42: LED chip (Light source)
- 42R: Red light emitting LED chip (First light source, another light source, second · third light source)
- 42G: Green light emitting LED chip (First light source, another light source, second · third light source)
- 42B: Blue light emitting LED chip (First light source, another light source, second · third light source)
- 49: Backlight unit
- 59: Liquid crystal display panel
- 69: Liquid crystal display device

## Claims

1. A backlight unit, comprising:
a plurality of light sources that emit light based on light amount adjustment data; and
a control portion that performs correction processing with respect to light source control data based on image data thereby to generate the light amount adjustment data,
wherein the control portion performs, with respect to a first piece of the light source control data relating to a first light source among the plurality of light sources, fundamental correction processing based on a relationship between the first piece of the light source control data and a luminance of the first light source, and further performs additional correction processing based on another piece of the light source control data relating to another light source among the plurality of light sources other than the first light source, thereby to generate a piece of the light amount adjustment data corresponding to the first piece of the light source control data.

2. The backlight unit according to claim 1, wherein
the another light source comprises a single light source or a plurality of light sources as a second light source adjacent to the first light source.

3. The backlight unit according to claim 2, wherein
the another light source comprises a single light source or a plurality of light sources as the second light source adjacent to the first light source and a third light source adjacent to the second light source.

4. The backlight unit according to claim 2 or 3, wherein
each of the plurality of light sources emits a single color light required for generation of a white color by mixing the light of respective colors, and
the first light source is a red light emitting light source and the second light source is a green light emitting light source.

5. The backlight unit according to claim 3, wherein
each of the plurality of light sources emits single color light required for generation of a white color by mixing the light of respective colors, and
the first light source is a red light emitting light source and at least one light source as the second light source and the third light source are green light emitting light sources.

6. A liquid crystal display device, comprising:
the backlight unit according to any one of claims 1 to 5; and
a liquid crystal display panel that receives light from the backlight unit.

7. A data generating method for generating light amount adjustment data used for controlling light emission of a plurality of light sources in a backlight unit, comprising:
in a case of performing correction processing with respect to light source control data based on image data thereby to generate the light amount adjustment data,
performing, with respect to a first piece of the light source control data relating to a first light source among the plurality of light sources, fundamental correction processing based on a relationship between the first piece of the light source control data and a luminance of the first light source, and further performing additional correction processing based on another piece of the light source control data relating to another light source among the plurality of light sources other than the first light source, thereby to generate a piece of the light amount adjustment data corresponding to the first piece of the light source control data.

8. A data generating program for generating light amount adjustment data in a backlight unit, the backlight unit comprising:
a plurality of light sources that emit light based on the light amount adjustment data; and
a control portion that performs correction processing with respect to light source control data based on image data thereby to generate the light amount adjustment data,
wherein the program makes the control portion perform, with respect to a first piece of the light source control data relating to a first light source among the plurality of light sources, fundamental correction processing based on a relationship between the first piece of the light source control data and a luminance of the first light source, and further perform additional correction processing based on another piece of the light source control data relating to another light source among the plurality of light sources other than the first light source, thereby to generate a piece of the light amount adjustment data corresponding to the first piece of the light source control data.

9. A computer-readable recording medium on which the data generating program according to claim 8 is recorded.
